Europäisches Patentamt

European Patent Office

Office européen des brevets

(11) Veröffentlichungsnummer: **0 242 760 B1**

(12) **EUROPÄISCHE PATENTSCHRIFT**

(45) Veröffentlichungstag der Patentschrift: **11.04.90**

(21) Anmeldenummer: **87105441.7**

(22) Anmeldetag: **13.04.87**

(51) Int. Cl.⁵: **B 60 R 11/02**

(54) Mechanische Diebstahlsicherung für elektronische Zusatzgeräte, vorzugsweise mit Kassettenlaufwerk, in Kraftfahrzeugen, insbesondere für Autoradios.

(30) Priorität: **23.04.86 DE 8611160 u**

(43) Veröffentlichungstag der Anmeldung:
**28.10.87 Patentblatt 87/44**

(45) Bekanntmachung des Hinweises auf die
Patenterteilung:
**11.04.90 Patentblatt 90/15**

(84) Benannte Vertragsstaaten:
**DE ES FR IT**

(56) Entgegenhaltungen:
**DE-A-2 145 396**
**DE-A-3 307 226**
**DE-U-1 819 698**
**DE-U-8 435 066**
**GB-A-2 105 083**

(73) Patentinhaber: **Blaupunkt-Werke GmbH**
**Robert-Bosch-Strasse 200**
**D-3200 Hildesheim (DE)**

(72) Erfinder: **Fahlbusch, Dieter**
**Alfelder Strasse 51**
**D-3201 Diekholzen (DE)**

(74) Vertreter: **Eilers, Norbert, Dipl.-Phys.**
**Blaupunkt-Werke GmbH Robert-Bosch-Strasse**
**200**
**D-3200 Hildesheim (DE)**

Courier Press, Leamington Spa, England.

## Beschreibung

Die Neuerung betrifft eine mechanische Diebstahlsicherung für elektronische Zusatzgeräte, vorzugsweise mit Kassettenlaufwerk, für Kraftfahrzeuge, z.B. Autoradios, die an ihrer Bedienungsseite eine Einschuböffnung für die Wechselkassette tragen und vom Aufenthaltsraum des Kraftfahrzeugs her in eine vorgegebene Öffnung einer Fahrzeugwand eingesetzt und in der Fahrzeugwand lösbar verriegelt und nach Lösung dieser Verriegelung herausziehbar sind und gemäß den Oberbegriff des Anspruchs 2 (DE—U—8 435 066).

Unter Kraftfahrzeug sind dabei nicht nur Autos, sondern alle personenaufnehmenden Kraftfahrzeuge, z.B. auch Schiffe, zu verstehen. Die Befestigung des Zusatzgeräts in der Fahrzeugwand kann unmittelbar durch Verschrauben oder durch Verrasten mit einem in die Einbauöffnung eingesetzten Einschubrahmen erfolgen. Unter Zusatzgeräte sind alle in Fahrzeugen möglichen elektronischen Geräte, auch solche mit Kassettenlaufwerk, zu verstehen, also neben Autoradios auch Videogeräte, Rechner, Anrufbeantworter und dergleichen.

Die bekannten zusätzlichen elektronischen Sicherungen durch Ruhekontakte zwischen Zusatzgerät und Einschubrahmen bzw. Einschubwand oder zwischen Zusatzgerät und Karosse erschweren zwar den Diebstahl durch Betätigung der Warnanlage. Auf unbewachten Parkplätzen kann es jedoch sehr lang dauern, bis der Alarm bemerkt wird, so daß zwischenzeitlich das Zusatzgerät durch Lösung der mechanischen Verrastung bereits unbefugt entfernt sein kann, wenn der Alarm bemerkt wird.

Es besteht deshalb die Aufgabe, die bekannte mechanische Verrastung des Zusatzgeräts mit dem Einschubrahmen oder der Karossenwand so mechanisch zu ergänzen, daß bereits der Zugang zu den Einschuböffnungen für die Lösebügel sehr erschwert wird und erst die zusätzliche mechanische Sicherung entfernt sein muß, ehe man überhaupt Lösebügel oder ein selbst gebautes Lösewerkzeug in die Einschuböffnungen einführen kann.

Die Erfindung löst diese Aufgabe durch die im Anspruch 1 geckennzeichmenden Merkmale. Eine weitere Erschwerung ist möglich, falls man die zusätzliche Einschuböffnungs-Sicherung mehrfach, z.B. sowohl auf der linken als auch der rechten Gruppe der Einschuböffnungen vorsieht.

Die Erfindung bringt den Vorteil, daß nur der Besitzer des oder der Sicherheitsschlüssel das Zylinder-Sicherheitsschloß erst nach Aufhebung der zusätzlichen Blockierung aus der Frontplatte herausziehen kann, worauf die Einschuböffnungen zum Einführen der Lösebügel frei werden. Da man für Sicherheits-Zylinderschlösser eine sehr große Zahl von Kombinationen verwenden kann, ist eine einfache, hohe Sicherheit gegen unbefugten Ausbau des Zusatzgeräts gegeben. Für Sicherheits-Zylinderschlösser kann man handelsübliche Modelle verwenden, so daß deren besondere Anfertigung entfällt. Erforderlich ist lediglich die Ausbildung ein oder mehrerer Einschuböffnungen als Schlüsselloch und der Ausschnitt einer Schließe seitlich am Einschubrahmen.

Die Zeichnung bringt ein Ausführungsbeispiel für die Neuerung und zwar bei einem Autoradio. Dabei zeigen in schematischer Darstellung:

Fig. 1: eine Draufsicht auf die Frontplatte des Autoradios und

Fig. 2: eine Teil-Seitenansicht des Autoradios mit Einschubrahmen laut Fig. 1, von der rechten Seite der Fig. 1 her gesehen.

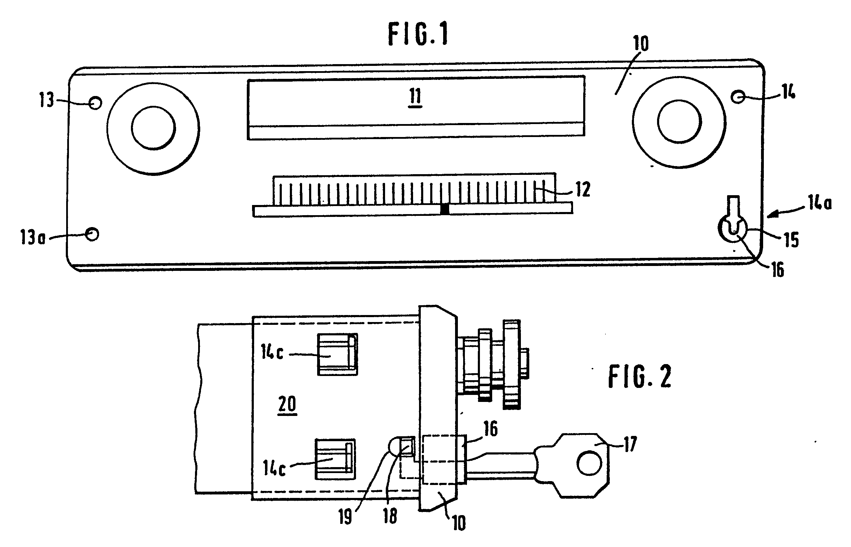

Gemäß Fig. 1 hat die Frontplatte 10 des Autoradios für Wechselkassetten deren übliche, mit einer Klappe verschlossene Einwurföffnung 11 für die Wechselkassette und eine Stationsskala 12 und beiderseits am Rand die Einschuböffnungen 13, 13a und 14, 14a zum Einführen der Lösebügel zum Entklinken der Federrasten 14c, die in Fig. 2 gezeigt sind. Die untere rechte Einschuböffnung 14a ist als Schlüsselloch 15 ausgebildet und nimmt ein Sicherheitsschloß 16 auf, das mit dem Sicherheitsschlüssel 17 in die Einschuböffnung eingesteckt wird und einen Schließbart 18 trägt, der in die Schließe 19 des Einschubrahmens 20 greift und das Autoradio zusätzlich im Einschubrahmen 20 verriegelt. Dieses Sicherheits-Zylinderschloß 16 kann nur mit dem Sicherheitsschlüssel 17 aus der Einschuböffnung nach dem Entriegeln herausgezogen werden, worauf die Einschuböffnung 14a frei wird und der Lösebügel in die beiden Einschuböffnungen 14, 14a eingeführt werden kann. Ein gleiches oder anders kodiertes Sicherheits-Zylinderschloß kann auch in eine linke Einschuböffnung, z.B. die Einschuböffnung 13, eingesetzt werden und den unbefugten Ausbau weiter erschweren.

## Patentansprüche

1. Mechanische Diebstahlsicherung für in Kraftfahrzeuge eingebaute Zusatzgeräte, insbesondere Autoradios, Kassettengeräte und dergleichen, wobei das Zusatzgerät mittels beidseitig vorspringender und in den Einschubrahmen (20) oder in die Einbauwand einspringender Federrasten (14c) gehalten ist und mit in Einschuböffnungen (13, 13a, 14, 14a) des Zusatzgeräts einführbare Lösebügel für die Federrasten (14c), dadurch gekennzeichnet, daß eine als Schließloch (15) ausgebildete Einschuböffnung (13, 13a, 14, 14a) ein Sicherheits-Zylinderschloß (16) aufnimmt, das die Einschuböffnung für den Lösebügel sperrend beim Schließen in den Einschubrahmen (20) oder in die Einbauwand einrastet.

2. Mechanische Diebstahlsicherung nach Anspruch 1, dadurch gekennzeichnet, daß mehrere als Schließloch (15) ausgebildete Einschuböffnungen (13, 13a, 14, 14a) unterschiedlich kodierte Sicherheits-Zylinderschlösser (16) aufnehmen.

## Revendications

1. Dispositif antivol mécanique pour appareils additionnels montés dans un véhicule automobile, notamment des auto-radios, des appareils à cassette et analogue, l'appareil additionnel étant maintenu de chaque côté au moyen de crochet à ressort (14c) encliquetés dans le cadre d'insertion (20) ou dans la paroi et avec un étrier de déblocage qu'on peut insérer dans les ouvertures d'insertion (13, 13a, 14, 14a) de l'appareil additionnel pour les crochets à ressort (14c) caractérisé en ce qu'une ouverture d'insertion exécutée en trou de serrure (15) reçoit une serrure de sécurité à cylindre (16), qui obture l'ouverture d'insertion vis-à-vis de l'étrier de déblocage, par verrouillage dans le cadre d'insertion (20), ou s'encliquète dans la paroi de montage.

2. Antivol mécanique, selon la revendication 1, caractérisé en ce que plusieurs ouverture d'insertion (13, 13a, 14, 14a) en forme de trou de serrure (15) peuvent recevoir différentes serrure de sécurité à cylindre à codes différents.

**Claims**

1. Mechanical anti-theft device for accessories installed in motor vehicles, in particular car radios, cassette players and the like, the accessory being held by means of spring catches (14c) projecting on both sides, which engage in the slide-in frame (20) or in the installation wall and having release elements for the spring catches (14c), which elements can be introduced into insertion openings (13, 13a, 14, 14a) of the accessory, characterized in that an insertion opening (13, 13a, 14, 14a) constructed as a lock hole (15) receives a security cylinder lock (16) which engages in the slide-in frame (20) or in the installation wall during locking, blocking the insertion opening for the release element.

2. Mechanical anti-theft device according to Claim 1, characterized in that a plurality of insertion openings (13, 13a, 14, 14a) constructed as lock or hole (15) receive differently encoded security cylinder locks (16).

# FIG.1

11

13
14
13a
12
14a
15
16
10

# FIG. 2

20
14c
14c
16
17
19 18 10
10

EP 0 242 760 B1